# EUROPÄISCHE PATENTSCHRIFT

(11) **EP 2 999 975 B1**
(45) Veröffentlichungstag und Bekanntmachung des Hinweises auf die Patenterteilung: **01.01.2020**
(21) Anmeldenummer: 14715260.7
(22) Anmeldetag: 01.04.2014
(51) Int. Cl.: G01S 13/34, G01S 13/42, G01S 13/44, G01S 13/93, G01S 7/40

(54) **BESTIMMUNG EINES ELEVATIONS-DEJUSTAGEWINKELS EINES RADARSENSORS EINES KRAFTFAHRZEUGS**
DETERMINATION OF AN ELEVATION MISALIGNMENT ANGLE OF A RADAR SENSOR OF A MOTOR VEHICLE
DÉTERMINATION D'UN ANGLE D'ÉLÉVATION/DÉSALIGNEMENT D'UN CAPTEUR RADAR D'UN VÉHICULE AUTOMOBILE

(30) Priorität: 23.05.2013 DE 102013209530
(43) Veröffentlichungstag der Anmeldung: 30.03.2016
(73) Patentinhaber: Robert Bosch GmbH, 70442 Stuttgart (DE)
(72) Erfinder: GROSS, Volker, 71254 Ditzingen (DE); KUEHNLE, Goetz, 71282 Hemmingen (DE); BECHLER, Dirk, 76135 Karlsruhe (DE); TREPTOW, Andre, 71665 Vaihingen An Der Enz (DE)
(86) Internationale Anmeldenummer: PCT/EP2014/056515
(87) Internationale Veröffentlichungsnummer: WO 2014/187597

(56) Entgegenhaltungen:
- DE-A1- 19 937 723
- DE-A1-102009 029 291

## Beschreibung

### STAND DER TECHNIK

Die Erfindung betrifft ein Verfahren zur Bestimmung eines Elevations-Dejustagewinkels eines Radarsensors eines Fahrzeugs, insbesondere eines Kraftfahrzeugs.

Radarsensoren werden in Kraftfahrzeugen zunehmend für sicherheitsrelevante Funktionen eingesetzt. Dabei ist die Bestimmung eines Elevationswinkels eines georteten Objektes von zunehmender Bedeutung. So kann beispielsweise aus einem Elevationswinkel und einem Abstand eines georteten Objektes Information zur Klassifizierung des Objektes als überfahrbar oder nicht überfahrbar gewonnen werden. Wenn der Radarsensor in Elevationsrichtung dejustiert ist, kann dies die Zuverlässigkeit der Klassifizierung von Objekten beeinträchtigen. Aber auch eine Bestimmung horizontaler Winkel von detektierten Radarobjekten kann durch einen in Elevationsrichtung dejustierten Radarsensor beeinträchtigt werden, wenn das zur Auswertung herangezogene Antennendiagramm der Antennen von dem in der tatsächlichen Elevationsrichtung wirksamen Antennendiagramm abweicht.

DE 10 2011 079 522 A1 beschreibt ein Verfahren, bei dem ein Dejustagewinkel des Radarsensors in Elevationsrichtung bestimmt wird auf der Basis der von der Winkelausrichtung des Radarsensors in Elevationsrichtung abhängigen Charakteristik eines von dem Radarsensor empfangenen Bodenclutter-Signals.

DE 199 37 723 C2 beschreibt ein Verfahren, bei dem von einem Radarziel reflektierte Empfangsstrahlen mit Antennendiagrammen, die unterschiedlichen Dejustagen in Abständen von 0,5° zugeordnet sind, verglichen werden und aus diesem Vergleich auf eine Dejustage des Radarsensors geschlossen wird. Durch Mittelwertbildung über die in vielen Messzyklen gespeicherten Höhenwinkel wird der am häufigste gespeicherte Fehlerwinkel als Winkel für eine Höhenwinkel-Fehljustage des Radarsensors bestimmt.

DE 10 2008 054 579 A1 beschreibt ein Verfahren, bei dem eine vertikale Dejustage eines Radarsensors auf der Basis einer Güte bestimmt wird, mit welcher ein von einem Radarziel reflektiertes Signal zu einem auf einen justierten Radarsensor hinweisenden Sensorprofil für den Horizontalwinkel passt.

DE 10 2009 029 291 A1 beschreibt eine planare Antenneneinrichtung für eine Radarsensorvorrichtung, bei der wenigstens eine erste Antennenspalte und wenigstens eine zweite Antennenspalte voneinander abweichende Richtcharakteristiken in vertikaler Richtung aufweisen, wobei die Phasendifferenz zwischen den Empfangsstrahlkeulen der ersten Antennenspalte und der zweiten Antennenspalte im Wesentlichen nur von dem Azimutwinkel und das Amplitudenverhältnis zwischen den Empfangsstrahlkeulen der ersten Antennenspalte und der zweiten Antennenspalte im Wesentlichen nur von dem Elevationswinkel der empfangenen Signale abhängig ist.

### OFFENBARUNG DER ERFINDUNG

Der Erfindung liegt die Aufgabe zugrunde, eine genauere und zuverlässigere automatische Erkennung einer Dejustage eines Radarsensors in Elevationsrichtung zu ermöglichen.

Diese Aufgabe wird erfindungsgemäß gelöst durch ein Verfahren zur Bestimmung eines Elevations-Dejustagewinkels eines Radarsensors eines Fahrzeugs, mit den Schritten:
- Bestimmung von Elevationswinkeln von Radarobjektortungen in Bezug auf ein Koordinatensystem des Radarsensors; und
- Bestimmung eines Elevations-Dejustagewinkels auf Basis einer Häufigkeitsverteilung der Elevationswinkel von zumindest einigen der Radarobjektortungen,
dadurch gekennzeichnet, dass
in dem Schritt der Bestimmung von Elevationswinkeln von Radarobjektortungen in Bezug auf ein Koordinatensystem des Radarsensors jeweils basierend auf Radarechos, die mit wenigstens zwei in Elevationsrichtung sich unterscheidenden Antennenrichtcharakteristiken erhalten werden, ein Elevationswinkel einer Radarobjektortung bestimmt wird,
und weiter gekennzeichnet durch den Schritt:
- Bestimmung eines Bodenreflexions-Korrekturwertes in Abhängigkeit von dem bestimmten Elevations-Dejustagewinkel;
wobei bei nachfolgenden Bestimmungen von Elevationswinkeln von Radarobjektortungen der Bodenreflexions-Korrekturwert zur Korrektur des bestimmten Elevationswinkels verwendet wird, um eine erwartete Mehrwegeausbreitung der Radarsignale durch Reflexion am Boden zu berücksichtigen.

Die Antennenrichtcharakteristiken können sich beispielsweise hinsichtlich eines unterschiedlichen Verlaufs der Empfangsleistung und/oder der Phasenlage eines empfangenen Radarsignals in Elevationsrichtung unterscheiden.

Vorzugsweise wird der Elevationswinkel einer Radarobjektortung jeweils bestimmt basierend auf Radarechos, die mit wenigstens zwei in Elevationsrichtung sich unterscheidenden Antennenrichtcharakteristiken erhalten werden, und basierend auf einer Elevationswinkelabhängigkeit der Unterschiede der Antennenrichtcharakteristiken.

Vorzugsweise wird bei der Bestimmung des Elevationswinkels einer Radarobjektortung in einem Elevationswinkelbereich der Elevationswinkel bestimmt basierend auf einem innerhalb des Elevationswinkelbereichs in eindeutiger Weise von dem Elevationswinkel abhängigen Unterschied der Antennenrichtcharakteristiken.

Indem zur Bestimmung eines jeweiligen Elevationswinkels einer Radarobjektortung Radarechos verwendet werden, die mit wenigstens zwei in Elevationsrichtung sich unterscheidenden Antennenrichtcharakteristiken erhalten werden, kann eine direkte, sehr genaue Schätzung eines Elevationswinkels erfolgen. Je nach der Elevationsantennencharakteristik des Radarsensors kann aus der Häufigkeit der bestimmten Elevationswinkel der Radarobjektortungen im einfachsten Falle der Elevations-Dejustagewinkel unmittelbar als negatives der Winkellage des Maximums der Häufigkeitsverteilung bestimmt werden. Für eine möglichst genaue Auswertung ist dabei vorteilhaft, wenn beispielsweise durch einen entsprechenden Erfassungsbereich des Radarsensors und/oder durch eine Selektion der zur Bildung der Häufigkeitsverteilung verwendeten Objektortungen die Bedingung möglichst gut erfüllt ist, dass in statistischen Mittel die Hauptstreuzentren der verwendeten Radarobjektortungen im wesentlichen auf der Einbauhöhe des Radarsensors liegen.

Vorteilhafte Ausgestaltungen und Weiterbildungen der Erfindung ergeben sich aus den Unteransprüchen.

Vorzugsweise werden für die Häufigkeitsverteilung lediglich Radarobjektortungen verwendet, die ein Mindest-Signal-zu-Rauschverhältnis und/oder eine Mindest-Rückstreustärke, auch als Radar-Cross-Section (RCS) bezeichnet, aufweisen. Die Rückstreustärke lässt sich über die Objektentfernung einer Radarobjektortung aus der Signalstärke und somit aus dem Signal-zu-Rauschverhältnis berechnen. Es können somit mit stärkerer Unsicherheit behaftete Radarobjektortungen unberücksichtigt bleiben, insbesondere zufällige, im Bereich des Rauschens liegende Ortungen.

Neben den bereits genannten Zuverlässigkeitskriterien des Mindest-Signal-Zu-RauschVerhältnis und/oder der Mindest-Rückstreustärke sind weitere, auf Merkmalen der Radarobjektortungen basierende Zuverlässigkeitskriterien für die Selektierung der Radarobjektortungen für die Häufigkeitsverteilung vorteilhaft. So können beispielsweise für die Häufigkeitsverteilung lediglich Radarobjektortungen verwendet werden, die eines oder eine vorgegebene Kombination der folgenden Zuverlässigkeitskriterien erfüllen:
- die Radarobjektortungen sind auf einen Entfernungsbereich beschränkt, weisen beispielsweise eine Mindestentfernung auf; damit lässt sich sicherstellen, dass ein Ziel als Punktziel betrachtet werden kann;
- die Radarobjektortungen sind auf einen Azimut-Winkelbereich beschränkt, beispielsweise einen Azimut-Winkelbereich um die optische Achse des Radarsensors; dadurch kann beispielsweise der Einfluss von Verkehrsschildern am Straßenrand auf die Bildung der Häufigkeitsverteilung verringert werden;
- der für die jeweilige Radarobjektortung bestimmte Elevationswinkel und/oder ein für die Radarobjektortung bestimmter Azimutwinkel wurden durch Vergleich wenigstens eines gemessenen Radarsignals mit wenigstens einem gespeicherten Referenzsignal mit einer Mindest-Vergleichsgüte bestimmt; unzuverlässige Radarobjektortungen können somit für die Bildung der Häufigkeitsverteilung ausgeschlossen werden, beispielsweise Situationen mit einer Leitplanken-Reflexion;
- die Radarobjektortungen betreffen ein sich bewegendes Radarziel, also kein stehendes Ziel; durch dieses Kriterium kann der Einfluss von solchen Radarobjekten, bei denen es sich nicht um Fahrzeuge handelt, verringert werden.

Bei dem Verfahren erfolgt nach einer Bestimmung eines Elevations-Dejustagewinkels bei nachfolgenden Bestimmungen von Elevationswinkeln von Radarobjektortungen eine Korrektur der Elevationswinkel in Abhängigkeit von dem bestimmten Elevations-Dejustagewinkel, bei der eine erwartete Mehrwegeausbreitung der Radarsignale durch Reflexion am Boden berücksichtigt wird. Durch eine Berücksichtigung einer Mehrwegeausbreitung durch Bodenreflexion kann je nach der Elevationsantennencharakteristik des Radarsensors ein etwaiger systematischer Fehler bei der Bestimmung des Elevationswinkels insbesondere bei schräg nach unten dejustiertem Radarsensor vermindert oder vermieden werden.

### KURZE BESCHREIBUNG DER ZEICHNUNGEN

Im folgenden wird ein Ausführungsbeispiel anhand der Zeichnung näher erläutert.

Es zeigen:
- Fig. 1: ein schematisches Blockschaltbild eines FMCW-Radarsystems;
- Fig. 2: eine schematische Darstellung eines Elevationsantennendiagramms von zwei Antennen des Radarsystems;
- Fig. 3: eine schematische Darstellung einer Situation mit einem in Elevationsrichtung dejustierten Radarsensor;
- Fig. 4: eine schematische Darstellung eines Diagramms einer in der Situation nach Fig. 3 erhaltenen Histogramms der Elevationswinkel;
- Fig. 5: eine schematische Darstellung zur Erläuterung eines Korrekturwinkels in einer Situation mit Bodenreflexion; und
- Fig. 6: eine schematische Darstellung des elevationswinkelabhängigen Verlaufs einer Kennlinie für einen Korrekturwert für die Bodenreflexion.

### DETAILLIERTE BESCHREIBUNG EINES AUSFÜHRUNGSBEISPIELS

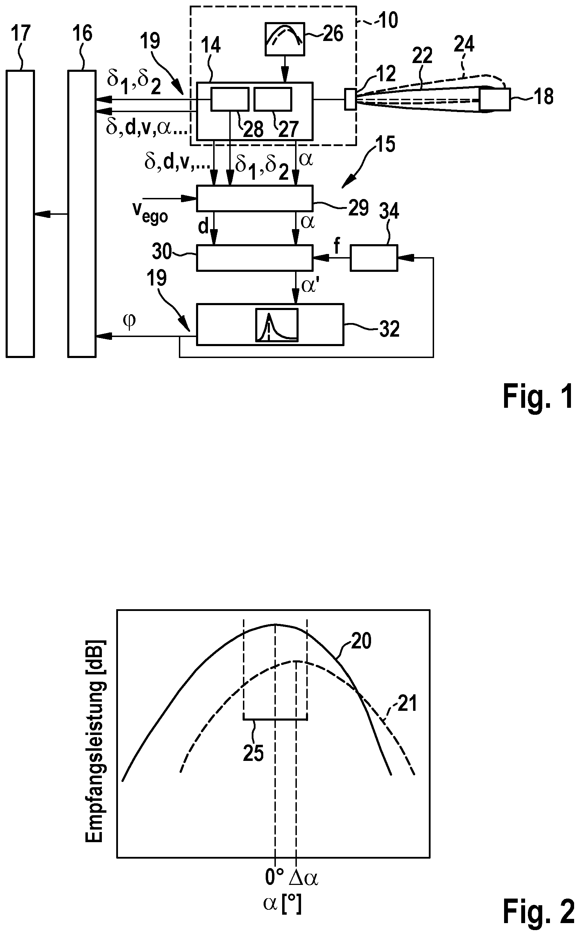

Fig. 1 zeigt schematisch einen azimutwinkelauflösenden Radarsensor 10 für ein Kraftfahrzeug mit einer Antennenanordnung 12 und einer Steuer- und Auswerteeinrichtung 14 sowie einer Auswerteeinrichtung 15 zur Bestimmung eines Elevations-Dejustagewinkels ϕ des Radarsensors 10. Weiter sind eine Auswertungseinheit 16 zur Objektdetektion auf der Basis von Ortungsdaten und eine Fahrassistenzeinrichtung 17 gezeigt.

Der Radarsensor 10 ist ein FMCW-Radarsensor, bei dem die Frequenz eines gesendeten Radarsignals periodisch moduliert wird, insbesondere in Form wenigstens einer Frequenzrampe, beispielsweise vier Rampen je Messzyklus. Die Antennenanordnung 12 umfasst mehrere Antennenelemente mit unterschiedlichen Richtcharakteristiken, die eine Bestimmung eines Azimutwinkels eines empfangenen Radarsignals gestatten. Die Steuer- und Auswerteeinrichtung 14 ist in an sich bekannter Weise zur Ansteuerung eines Oszillators des Radarsensors 10 und Auswertung der von der Antennenanordnung 12 empfangenen Radarsignale und Bestimmung von Ortungsdaten erfasster Radarobjekte 18 ausgebildet, beispielsweise auf der Basis von Amplituden und Phasen von Peaks von Basisbandsignalen. Die Ortungsdaten, die beispielsweise zu einem georteten Radarobjekt 18 einen Azimutwinkel δ, eine Entfernung d, eine Relativgeschwindigkeit v in Bezug auf das eigene Fahrzeug und einen Elevationswinkel α umfassen, werden über eine Schnittstelle 19 zur Verfügung gestellt und an die Auswerteeinheit 16, die eine Objektdetektion und ein Objekttracking durchführt, und an die Fahrassistenzeinrichtung 17, beispielsweise einen Abstandsregler und/oder einen Notbremsassistenten, übermittelt.

Der Radarsensor 10 ist dazu ausgebildet, basierend auf Radarechos, die mit zwei in Elevationsrichtung sich unterscheidenden Antennenrichtcharakteristiken 20, 21 (Fig. 2) der Antennenanordnung 12 erhalten werden, den Elevationswinkel α einer Radarobjektortung zu bestimmen. Beispielsweise kann die Antennenanordnung 12 zwei Sendeoder Empfangsantennen mit unterschiedlichen Hauptwirkrichtungen in Elevationsrichtung anfassen. Fig. 1 zeigt schematisch mit einer durchgezogenen Linie eine Radarkeule 22 einer Hauptantenne der Antennenanordnung 12 und mit einer punktierten Linie eine Radarkeule 24 einer zweiten Antenne. Die Hauptwirkrichtung der zweiten Antenne ist beispielsweise um einen festen Winkelwert gegenüber der Hauptwirkrichtung der Hauptantenne nach oben gerichtet.

Fig. 2 zeigt schematisch die sich unterscheidenden Antennenrichtcharakteristiken 20, 21 in Form eines Antennendiagramms, bei dem die Empfangsleistung in dB dargestellt ist über dem Elevationswinkel a, bezogen auf ein Sensorkoordinatensystem des Radarsensors 10. Die Hauptempfindlichkeit der Hauptantenne, entsprechend der Radarkeule 22, liegt beispielsweise bei dem Elevationswinkel 0°. Die zweite Antenne hat eine Hauptempfindlichkeitsrichtung bei einem Elevationswinkel Δα, der beispielsweise um einige Grad von der Hauptempfindlichkeitsrichtung der Hauptantenne abweicht.

Die Antennenrichtcharakteristiken 20, 21 sind beispielsweise für wenigstens einen festen Azimutwinkel von 0° in einem Speicher 26 abgelegt. Durch Leistungsvergleich der mit den unterschiedlichen Antennenrichtcharakteristiken 20, 21 erhaltenen Radarechos kann in einem Eindeutigkeitsbereich 25 des Elevationswinkels aus den gemessenen Leistungen eindeutig auf den Elevationswinkel α des georteten Radarobjekts 18 geschlossen werden, so dass eine direkte Messung des Elevationswinkels α möglich ist.

Die Steuer- und Auswerteeinrichtung 14 umfasst einen Einzielwinkelschätzer 27, der dazu eingerichtet ist, für jede Frequenzrampe eines Messzyklus einen Azimutwinkel δ eines Radarechos zu bestimmen. Beispielsweise werden normierte Amplituden und Phasen von Peaks der Basisbandsignale mit entsprechenden Antennendiagrammen für die Antennenelemente der Antennenanordnung 12 abgeglichen, so dass sich anhand einer bekannten Winkelabhängigkeit der Amplituden und Phasen die Azimutwinkel δ der georteten Objekte 18 bestimmen lassen. Hierzu wird ein eindimensionaler, d.h. in Abhängigkeit des Winkels berechneter Suchraum von Amplituden- und Phasendifferenzen durchsucht, um eine Korrelation zwischen dem gemessenen Signal und einem für einen Winkel erwarteten Signal aufzufinden. Ein Peak der Korrelation kennzeichnet dann den wahrscheinlichsten Wert des Azimutwinkels δ.

Weiter umfasst die Steuer- und Auswerteeinrichtung 14 einen Mehrzielschätzer 28, der dazu eingerichtet ist, für wenigstens eine Frequenzrampe in einem Messzyklus wenigstens zwei Azimutwinkel δ₁, δ₂ eines Radarechos zu bestimmen und eine Mehrzielsituation zu erkennen, wenn sich die Objektreflexion wenigstens zwei Radarobjekten 18 an unterschiedlichen Azimutwinkelpositionen zuordnen lässt. Hierzu wird beispielsweise ein zweidimensionaler, d.h. in Abhängigkeit eines ersten Winkels und eines zweiten Winkels berechneter Suchraum durchsucht, um eine Korrelation zwischen dem gemessenen Signal und einem für eine Kombination von zwei Winkeln erwarteten Signal aufzufinden.

Beispielsweise kann der Mehrzielschätzer dazu eingerichtet sein, nur dann eine Mehrzielreflexion zu erkennen, wenn sich das Radarecho wenigstens zwei Radarobjekten 18 an unterschiedlichen Winkelpositionen bei einer Entfernung d und einer Relativgeschwindigkeit v zuordnen lässt. Beispielsweise kann der Mehrzielschätzer 28 dazu eingerichtet sein, eine Mehrzielsituation zu erkennen, wenn in einem mehrere unterschiedliche Frequenzrampen umfassenden Messzyklus des FMCW-Radarsensors 10 für eine Entfernung d und eine Geschwindigkeit v jeweilige Radarechos sich wenigstens zwei Radarobjekten 18 an unterschiedlichen Winkelpositionen zuordnen lassen. D.h., die betreffenden Radarechos sind auf keiner der Frequenzrampen des Messzyklus nach Entfernung d und Geschwindigkeit v trennbar. Die Erkennung einer Mehrzielsituation ist an sich bekannt und wird daher hier nicht weiter beschrieben.

Die Steuer- und Auswerteeinrichtung 14 ist dazu eingerichtet, eine Situation überlagerter Radarechos in einem Peak eines bei einer Frequenzrampe erhaltenen diskreten Frequenzspektrums des Basisbandsignals zu erkennen, basierend auf Abweichungen der Peak-Form von einer für ein Einzelziel erwarteten Peak-Form. Die Erkennung solcher Peaküberlagerungen kann beispielsweise gemäß dem in EP 2 182 380 A1 angegebenen Verfahren erfolgen.

Die zu jeder Radarobjektortung ermittelten Ortungsdaten werden von der Steuer- und Auswerteeinrichtung 14 an eine Selektionseinrichtung 29 ausgegeben, welche die Radarobjektortungen basierend auf den Ortungsdaten danach selektiert, ob sie bestimmte Zuverlässigkeitskriterien erfüllen. Die selektierten Radarobjektortungsdaten, insbesondere der Elevationswinkel α und die Entfernung d, werden von der Selektionseinrichtung 29 an eine Bodenreflexions-Korrektureinrichtung 30 übergeben.

Die Bodenreflexions-Korrektureinrichtung 30 führt gegebenenfalls eine Korrektur der Elevationswinkel α durch und übergibt einen korrigierten Elevationswinkel a' an eine Einheit 32 zur Bildung eines Elevationswinkel-Histogramms. Die Einheit 32 ist in einer weiter unten näher erläuterten Weise dazu eingerichtet, ein Histogramm der Elevationswinkel der selektierten Radarobjektortungen zu bilden und daraus einen Schätzwert für einen Elevations-Dejustagewinkel ϕ zu ermitteln. Der Elevations-Dejustagewinkel ϕ wird beispielsweise ebenfalls über eine Schnittstelle 19 an die FahrassistenzEinrichtung ausgegeben.

Weiter wird aus dem Elevations-Dejustagewinkel ϕ über eine in der Auswerteeinrichtung 15 abgelegte Kennlinie 34 ein Bodenreflexions-Korrekturwert f bestimmt, der von der Bodenreflexions-Korrektureinrichtung 30 zur Korrektur der Elevationswinkel α verwendet wird.

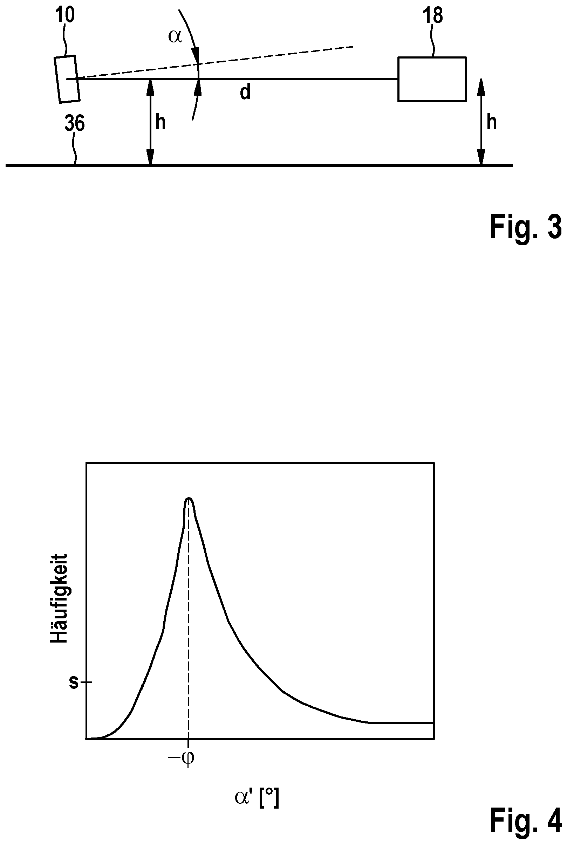

Fig. 3 zeigt schematisch eine Situation mit einem in Elevationsrichtung dejustierten Radarsensor 10. Der Radarsensor 10 ist in einer Einbauhöhe h am eigenen Kraftfahrzeug angeordnet. Ein Radarobjekt 18 wird in derselben Höhe h über der Fahrbahn 36 in einer Entfernung d geortet. Der von der Steuer- und Auswerteeinrichtung 14 bestimmte Elevationswinkel α beträgt beispielsweise α = -2°, wenn der Radarsensor 10 gegenüber der Horizontalen um einen Winkel von +2° nach oben dejustiert ist.

Unter der Annahme, dass die weitaus meisten Radarobjektortungen solche Radarobjekte 18 betreffen, die sich auf derselben Höhe wie der Radarsensor 10 befinden, ergibt sich in einem Histogramm der gemessenen Elevationswinkel α über eine längere Zeit ein Maximum bei einer Elevationswinkellage -ϕ, die dem Negativen des Elevations-Dejustagewinkels ϕ entspricht. Der Radarsensor 10 hat im beschriebenen Beispiel einen relativ weiten Erfassungsbereich in Azimutrichtung und in Elevationsrichtung. Um eine weitgehende Gültigkeit der Annahme über die Höhe h der georteten Objekte 18 zu erreichen, ist die Selektionseinrichtung 29 dazu eingerichtet, die für die Bildung des Histogramms herangezogenen Radarobjektortungen zu selektieren. Eine Selektion kann beispielsweise anhand mehrerer Zuverlässigkeitskriterien erfolgen, die sämtlich erfüllt sein müssen, damit eine Radarobjektordnung verwendet wird.

Fig. 4 zeigt für die in Fig. 3 gezeigte Situation eines beispielsweise um +2° nach oben dejustierten Radarsensors 10 schematisch ein bei einer Messfahrt von 2 Stunden Dauer erhaltenes Histogramm der Elevationswinkel, wobei die folgenden Zuverlässigkeitskriterien für die Selektierung verwendet wurden:
Gemäß einem ersten Zuverlässigkeitskriterium liegt die Entfernung d der Objektortung in einem Entfernungsbereich ab einer Mindestentfernung. Diese wird so gewählt, dass davon auszugehen ist, dass ein Fahrzeug als ein Punktziel erfasst wird.

Gemäß einem weiteren Zuverlässigkeitskriterium weist der bestimmte Azimutwinkel δ eine Mindestgüte auf, die eine Betrachtung des georteten Radarobjekts 18 als Punktreflektor für die Bestimmung der Ortungsdaten gestattet. Ein Wert einer Güte einer Winkelbestimmung kann beispielsweise anhand des Grades einer Übereinstimmung erhaltener Radarechosignale mit in der Steuer- und Auswerteeinrichtung 14 abgelegten Antennendiagrammen bestimmt werden.

Gemäß einem weiteren Zuverlässigkeitskriterium weist die Radarobjektortung ein Signal-zu-Rausch-Verhältnis der Empfangsleistung auf, das größer oder gleich einem Mindestwert ist. Dadurch können Ortungen irrelevanter Objekte ausgeschlossen werden.

Gemäß einem weiteren Zuverlässigkeitskriterium werden von der Selektionseinrichtung 29 solche Radarobjektortungen für die Verwendung für das Histogramm ausgeschlossen, bei denen der Mehrzielschätzer 28 zwei oder mehr Azimutwinkel δ₁, δ₂ Radarobjekten 18 bei einer Entfernung d und einer Relativgeschwindigkeit v zuordnet und somit eine Mehrzielsituation erkennt. D.h., es werden für die Häufigkeitsverteilung lediglich Radarobjektortungen verwendet, bei denen das Radarecho lediglich einem Radarobjekt an einer Azimut-Winkelposition zugeordnet wird. So kann vermieden werden, dass etwaige aufgrund von konstruktiver oder destruktiver Interferenz der unterschiedlichen Radarreflexionen fehlerhafte Elevationswinkel in die Häufigkeitsverteilung eingehen.

Gemäß einem weiteren Zuverlässigkeitskriterium werden von der Selektionseinrichtung 29 solche Radarobjektortungen für die Verwendung für das Histogramm ausgeschlossen, bei denen durch die Steuer- und Auswerteeinrichtung 14 eine Situation überlagerter Radarechos in einem zugeordneten Peak erkannt wird. Indem für die Häufigkeitsverteilung nur Radarobjektortungen verwendet werden, bei denen keine Peaküberlagerung erkannt wird, können Objektortungen ausgeschlossen werden, bei denen aufgrund von Interferenz der Radarechos die Zuverlässigkeit der Objektortung in Frage gestellt sein kann.

Durch die beschriebenen Zuverlässigkeitskriterien werden von der Selektionseinrichtung 29 hauptsächlich solche Radarobjektortungen mit zugehörigen Elevationswinkeln α und Entfernungen d selektiert, bei denen es sich mutmaßlich um andere Fahrzeuge handelt und die als Punktziele behandelt werden können.

Die Selektionseinrichtung 29 kann auch dazu ausgebildet sein, weitere Zuverlässigkeitskriterien anzuwenden. Beispielsweise kann die Selektionseinrichtung 29 auf die Eigengeschwindigkeit V_{ego} des eigenen Fahrzeugs zurückgreifen, um beispielsweise stehende Ziele auszuschließen, oder um nur dann Radarobjektortungen weiterzugeben, wenn das eigene Fahrzeug sich bewegt oder eine Mindestgeschwindigkeit aufweist. So können in statischen Verkehrssituationen überproportional starke Einflüsse einzelner Radarziele auf die Häufigkeitsverteilung vermieden werden.

In der in Fig. 3 beispielhaft gezeigten Situation mit nach oben dejustiertem Radarsensor kann der Boden 36, d.h. die Fahrbahn, je nach Antennendiagramm bereits ohne Einfluss auf die gemessenen Elevationswinkel α von Radarobjekten 18 auf der gleichen Höhe h wie der Radarsensor 10 sein. In diesem Fall übergibt die Bodenreflexions-Korrektureinrichtung 30 die Elevationswinkel α unverändert als korrigierte Elevationswinkel a' an die Einheit 32.

Die Einheit 32 bildet aus den erhaltenen Elevationswinkeln a' der Radarobjektortungen ein zeitlich gleitendes Histogramm. Dies kann beispielsweise über einen Filter mit zeitlich limitiertem Gedächtnis realisiert sein. Das Histogramm wird beispielsweise in Form einer Häufigkeitsverteilung über einen Wertebereich der Elevationswinkel a' gebildet. Das Histogramm enthält keine Entfernungsinformation, sondern ausschließlich Winkelinformation.

Die Einheit 32 ist beispielsweise dazu eingerichtet, die Elevationswinkellage -ϕ des Maximums der Häufigkeitsverteilung zu bestimmen und das Negative dieses Wertes als Relations-Dejustagewinkel ϕ auszugeben, wenn das Maximum der Häufigkeitsverteilung einen Schwellwert s erreicht oder überschreitet. Der Schwellwert s wird so gewählt, dass die ermittelten Dejustagewinkel zuverlässig sind. Dazu können beispielsweise in typischen Verkehrssituationen bereits wenige Minuten Fahrzeit genügen.

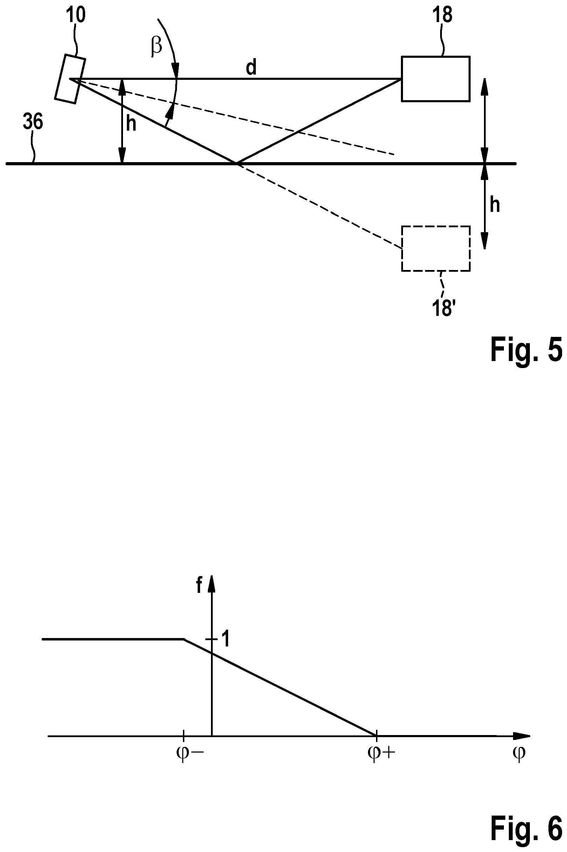

Während in der in Fig. 3 gezeigten Situation im Normalfall kein Einfluss der Fahrbahn 36 auf die Bestimmung der Elevationswinkel α zu erwarten ist, kann bei einer schematisch in Fig. 5 dargestellten Situation mit nach unten dejustiertem Radarsensor 10 bereits ein wesentlicher Teil der Empfangsleistung über eine Mehrwegeausbreitung mit Reflexion am Boden 36 empfangen werden. Geht beispielsweise der direkte Ausbreitungsweg in horizontale Richtung gleich stark in die Empfangsleistung ein wie der Ausbreitungsweg mit Reflexion am Boden, so würde eine Elevationswinkelverteilung mit einem Maximum auf Höhe des Bodens 36 in der Entfernung d erhalten werden. Der Ausbreitungsweg mit Reflexion entspricht dabei einem Spiegelobjekt 18' in einer Höhe h unterhalb der Fahrbahn. In Abhängigkeit der Intensität der Bodenreflexion und in Abhängigkeit des Elevations-Antennendiagramms, d.h. der Antennenrichtcharakteristik in Elevationsrichtung, beeinflusst die Bodenreflexion den gemessenen Elevationswinkel α unterschiedlich stark. Dieser Einfluss wird von der BodenreflexionsKorrektureinrichtung 30 in der folgenden Weise berücksichtigt.

Aus der von der Einheit 32 ermittelten Lage des Häufigkeitsmaximums des Histogramms wird, wie beschrieben, der Elevations-Dejustagewinkel ϕ bestimmt. In Abhängigkeit des bestimmten Elevations-Dejustagewinkels ϕ wird gemäß der in Fig. 6 beispielhaft gezeigten Kennlinie ein Bodenreflexions-Korrekturwert f bestimmt. Im gezeigten Beispiel ist oberhalb einer oberen Korrekturschwelle ϕ+ der Korrekturwert f = 0. Dies entspricht Situationen mit relativ weit nach oben dejustiertem Radarsensor 10, bei denen keine Bodenreflexions-Korrektur erforderlich ist. Unterhalb der oberen Korrekturschwelle ϕ+ findet eine Bodenreflexions-Korrektur statt. Gemäß der in Fig. 6 gezeigten Kennlinie nimmt der Wert des Korrekturwerts f, und damit das Ausmaß der Korrektur, im wesentlichen kontinuierlich zu, bis bei einer unteren Korrekturschwelle ϕ. der Korrekturwert f ein Maximum f = 1 annimmt, so dass hier eine volle Korrektur der Bodenreflexion stattfindet.

Die Bodenreflexions-Korrektur erfolgt, indem der gemessene, scheinbare Elevationswinkel α bei einer Objektentfernung d durch Addition eines mit f skalierten Korrekturwinkels β korrigiert wird. Der Korrekturwinkel β wird beispielsweise bestimmt als β = arctan (h/d). Das Ausmaß der Korrektur des bestimmen Elevationswinkels α hängt von der Entfernung d der Objektortung ab. Bei einem Elevations-Dejustagewinkel ϕ unterhalb der unteren Korrekturschwelle von 0° erfolgt eine volle Winkelkorrektur, indem zum scheinbaren Elevationswinkel α der nachfolgenden Radarobjektortungen der volle Korrekturwinkel β addiert wird. Dies entspricht in der in Fig. 5 gezeigten Situation einer Anhebung der scheinbaren Objekthöhe von Fahrbahnniveau auf die tatsächliche Objekthöhe h.

Bei Elevations-Dejustagewinkeln ϕ im Bereich zwischen den Korrekturschwellen erfolgt eine Korrektur lediglich um einen Anteil des Winkels β entsprechend dem Faktor f.

Im gezeigten Beispiel erfolgt auch bei einem genau horizontal justierten Radarsensor 10 bereits eine volle Korrektur der Elevationswinkel a, entsprechend f = 1.

Die Kennlinie des Bodenreflexions-Korrekturwertes f kann beispielsweise bestimmt oder kalibriert werden, etwa durch eine Messfahrt, oder sie kann anhand eines Antennendiagramms und erwarteter Bodenreflexions-Eigenschaften berechnet werden.

Hat, etwa durch eine Erschütterung des eigenen Fahrzeugs, beispielsweise durch einen Parkrempler, eine Veränderung des Dejustagewinkels des Radarsensors 10 in Elevationsrichtung stattgefunden, so wird durch die nachfolgenden Radarobjektortungen ein Maximum des gleitenden Histogramms bei einer anderen Winkellage -ϕ heranwachsen, das schließlich als Häufigkeitsmaximum erkannt wird. Es wird dann ein neuer Elevations-Dejustagewinkel ϕ ermittelt, und eine Anpassung des Bodenreflexions-Korrekturwertes f erfolgt gegebenenfalls. Die Implementation des gleitenden Histogramms, insbesondere die Zeitdauer, in der bei typischen Verkehrssituationen ein neues Häufigkeitsmaximum die verbleibende Höhe des vorherigen Maximums übertrifft, kann variabel gewählt werden. Dabei muss ein Kompromiss gefunden werden zwischen der Schnelligkeit und der Stabilität der Ermittelung eines neuen Dejustagewinkels. Bei ausreichend hoher Dynamik kann beispielsweise eine plötzlich erfolgte Dejustage nach 2 bis 3 Minuten erkannt werden.

Die beschriebene Bodenreflexions-Korrektur ermöglicht es, den Elevations-Dejustagewinkel ϕ mit hoher Genauigkeit sowohl bei positiver als auch bei negativer Elevationswinkelrichtung der Dejustage des Radarsensors 10 zu erkennen und den Wert des Winkels zu bestimmen.

Es wird somit nicht nur eine zuverlässige Dejustageerkennung ermöglicht, sondern der ermittelte Elevations-Dejustagewinkel ϕ kann von einer Fahrassistenzeinrichtung zur Korrektur der Ortungsdaten verwendet werden. Durch die Bodenreflexions-Korrektur können systematische Schätzfehler der vertikalen Dejustageerkennung vermieden werden. Durch die beschriebenen Zuverlässigkeitskriterien wird sichergestellt, dass die Annahme, dass die Objekthöhe der für die Bildung des Histogramms verwendeten Radarobjektortungen gleich der Einbauhöhe des Radarsensors 10 ist, im wesentlichen zutrifft. Der bestimmte Elevations-Dejustagewinkel ϕ kann somit auch Grundlage für sicherheitsrelevante Fahrassistenzeinrichtungen 17 sein, bei denen beispielsweise aufgrund des gemessenen Elevationswinkels α und unter Berücksichtigung des bestimmten Elevations-Dejustagewinkels ϕ ein Radarobjekt 18 als überfahrbar oder nichtüberfahrbar klassifiziert wird. Bei Überschreiten von Wertegrenzen für den Elevations-Dejustagewinkel wird optional ein Fehlersignal ausgegeben.

Vorteilhaft ist insbesondere, dass die vertikale Dejustierung des Radarsensors 10 automatisch erfolgen kann und die Implementierung erfolgen kann, indem die Auswerteeinrichtung 15 in Form von Verarbeitungsprozeduren einer Datenverarbeitungseinheit ohne weitere Hardwarekomponenten realisiert wird. Die Auswerteeinrichtung 15 kann in der Steuer- und Auswerteeinrichtung 14 integriert sein. Vorteilhaft ist auch die Einfachheit der für die Bildung des Histogramms und der Bestimmung der Lage des Maximums durchzuführenden Rechenoperationen. Vorteilhaft ist außerdem, dass die Erkennung und Bestimmung des Elevations-Dejustagewinkels unmittelbar auf Basis der in Bezug auf das Koordinatensystem des Radarsensors 10 gemessenen Ortungsdaten erfolgt. Sie ist, unter der Annahme, dass im Mittel die Reflexpunkte der herangezogenen georteten Objekte auf Sensorhöhe liegen, somit unabhängig von Annahmen über die Radarobjekte, die erst beispielsweise auf einer höheren Ebene einer Objektverfolgung in der Auswertungseinrichtung 16 getroffen werden. Insgesamt wird eine verbesserte Zuverlässigkeit und Robustheit der Detektionsleistung des Radarsensors 10 erreicht.

Die direkte Messung des Elevationswinkels α einer Radarobjektortung kann auf unterschiedliche Weise anhand von Radarechos, die mit wenigstens zwei in Elevationsrichtung sich unterscheidenden Antennenrichtcharakteristiken gehalten werden, erfolgen. So kann beispielsweise der Radarsensor 10 gemäß DE 10 2010 064 348 A1 eine Antennenanordnung aufweisen, die durch eine Steuereinrichtung derart ansteuerbar ist, dass sie eine zeitlich variierende Richtcharakteristik aufweist. Beispielsweise kann die Antennenanordnung mindestens zwei Gruppen von Antennenelementen aufweisen, die sich in ihrer Wirkrichtung in Elevation unterscheiden und die im periodischen Wechsel aktiviert und deaktiviert werden.

Der Radarsensor 10 kann auch gemäß DE 10 2009 047 561 A1 wenigstens zwei Antennenelementreihen aufweisen, die mit ihren zugehörigen Phasenzentren in vertikaler Richtung gegeneinander verschoben sind, wobei eine strahlformende Zylinderlinse derart angeordnet und ausgebildet ist, dass die von den wenigstens zwei Antennenelementreihen ausgehende Antennenstrahlung jeweils unter unterschiedlichen vertikalen Winkeln fokussiert wird.

Der Radarsensor 10 kann auch eine Antennenanordnung 12 gemäß der in DE 10 2009 046 491 A1 beschriebenen planaren Antenneneinrichtung aufweisen, bei der ein Elevationswinkel oder ein Schätzwert des Elevationswinkels eines erfassten Objektes bestimmbar ist. Der Elevationswinkel oder der Schätzwert des Elevationswinkels kann beispielsweise bestimmbar sein durch einen Phasenunterschied zwischen zwei Subspalten einer Antennenspalte.

Zur Bestimmung eines Elevationswinkels kann der Radarsensor 10 auch gemäß der in DE 10 2009 029 503 A1 beschriebenen Radarsensorvorrichtung ausgebildet sein.

Der Radarsensor 10 kann auch eine Antennenanordnung 12 entsprechend der in DE 10 2009 029 291 A1 beschriebenen planaren Antenneneinrichtung aufweisen.

Während oben ein Mehrzielschätzer für Richtungswinkel in Form von Azimutwinkeln beschrieben wurde, kann allgemein ein Mehrzielschätzer für Mehrziel-Situationen betreffend Richtungswinkel in Form von Azimutwinkeln und/oder Elevationswinkeln vorgesehen sein.

## Patentansprüche

1. Verfahren zur Bestimmung eines Elevations-Dejustagewinkels (ϕ) eines Radarsensors (10) eines Fahrzeugs, mit den Schritten:
- Bestimmung von Elevationswinkeln (α) von Radarobjektortungen in Bezug auf ein Koordinatensystem des Radarsensors (10); und
- Bestimmung eines Elevations-Dejustagewinkels (ϕ) auf Basis einer Häufigkeitsverteilung der Elevationswinkel (α) von zumindest einigen der Radarobjektortungen,
**dadurch gekennzeichnet, dass**
in dem Schritt der Bestimmung von Elevationswinkeln (α) von Radarobjektortungen in Bezug auf ein Koordinatensystem des Radarsensors (10) jeweils basierend auf Radarechos, die mit wenigstens zwei in Elevationsrichtung sich unterscheidenden Antennenrichtcharakteristiken (20, 21) erhalten werden, ein Elevationswinkel (α) einer Radarobjektortung bestimmt wird,
und weiter **gekennzeichnet durch** den Schritt:
- Bestimmung eines Bodenreflexions-Korrekturwertes (f) in Abhängigkeit von dem bestimmten Elevations-Dejustagewinkel (ϕ);
wobei bei nachfolgenden Bestimmungen von Elevationswinkeln (α) von Radarobjektortungen der Bodenreflexions-Korrekturwert (f) zur Korrektur des bestimmten Elevationswinkels (α) verwendet wird, um eine erwartete Mehrwegeausbreitung der Radarsignale durch Reflexion am Boden (36) zu berücksichtigen.

2. Verfahren nach Anspruch 1, bei dem ein Bodenreflexions-Korrekturwert (f) gemäß einer Kennlinie des Korrekturwertes (f) in Abhängigkeit von dem bestimmten Elevations-Dejustagewinkel (ϕ) bestimmt wird, wobei der Korrekturwert (f) gemäß der Kennlinie mehrere Zwischenwerte zwischen einem Maximalwert und einem Minimalwert annehmen kann, und das Ausmaß der Korrektur des bestimmten Elevationswinkels (α) von dem Korrekturwert (f) abhängt.

3. Verfahren nach einem der vorstehenden Ansprüche, bei dem nach einer Bestimmung eines Elevations-Dejustagewinkels (ϕ) bei nachfolgenden Bestimmungen von Elevationswinkeln (α) von Radarobjektortungen eine Korrektur der Elevationswinkel (α) erfolgt, wobei ein Korrekturwert (f) basierend auf dem bestimmten Elevations-Dejustagewinkel (ϕ) bestimmt wird, und wobei der Elevationswinkel (α) bei einer Objektentfernung d durch Addition eines mit einem Korrekturwert (f) skalierten Korrekturwinkels β korrigiert wird, wobei der Korrekturwinkel β gemäß der Gleichung β = arctan (h/d) bestimmt wird, wobei h der Einbauhöhe des Radarsensors (10) entspricht.

4. Verfahren nach einem der vorstehenden Ansprüche, wobei für die Häufigkeitsverteilung lediglich Radarobjektortungen verwendet werden, die ein Mindest-Signal-Zu-Rausch-Verhältnis und/oder eine Mindest-Rückstreustärke aufweisen.

5. Verfahren nach einem der vorstehenden Ansprüche, wobei für die Häufigkeitsverteilung lediglich Radarobjektortungen verwendet werden, die eines oder eine Kombination mehrerer der Kriterien erfüllen, dass:
- die Radarobjektortungen auf einen Entfernungsbereich beschränkt sind;
- die Radarobjektortungen auf einen Azimut-Winkelbereich beschränkt sind;
- der für die jeweilige Radarobjektwinkelortung bestimmte Elevationswinkel (α) und/oder ein für die Radarobjektortung bestimmter Azimutwinkel (δ) durch Vergleich wenigstens eines gemessenen Radarsignals mit wenigstens einem gespeicherten Referenzsignal mit einer Mindest-Vergleichsgüte bestimmt wurde;
- die Radarobjektortungen sich bewegende Radarziele (18) betreffen,
- die Radarobjektortungen bei einer Fahrgeschwindigkeit (V_{ego}) ungleich Null des eigenen Fahrzeugs erfolgt sind.

6. Verfahren nach einem der vorstehenden Ansprüche, wobei der Radarsensor (10) einen Mehrziel-Schätzer (28) umfasst, der dazu eingerichtet ist, eine Mehrziel-Situation zu erkennen und wenigstens zwei Richtungswinkel (δ₁, δ₂) eines Radarechos zu bestimmen, wenn sich das Radarecho wenigstens zwei Radarobjekten (18) an unterschiedlichen Winkelpositionen (δ₁, δ₂) zuordnen lässt, und
wobei für die Häufigkeitsverteilung lediglich Radarobjektortungen verwendet werden, bei denen der Mehrziel-Schätzer (28) keine Mehrziel-Situation erkennt.

7. Verfahren nach einem der vorstehenden Ansprüche, wobei der Radarsensor (10) als FMCW-Radarsensor ausgebildet ist und eine Auswerteeinrichtung (14) aufweist, die dazu eingerichtet ist, eine Situation überlagerter Radarechos in einem Peak eines bei einer Frequenzrampe erhaltenen diskreten Frequenzspektrums eines Basisbandsignals zu erkennen, und
wobei für die Häufigkeitsverteilung Radarobjektortungen ausgeschlossen werden, bei denen durch die Auswerteeinrichtung (14) eine Situation überlagerter Radarechos erkannt wird.

8. Radarsensor für Fahrzeuge, **gekennzeichnet durch** eine Auswerteeinrichtung (15), die zur Ausführung des Verfahrens nach einem der Ansprüche 1 bis 7 ausgebildet ist.

## Claims

1. Method for determining an elevation misalignment angle (ϕ) of a radar sensor (10) of a vehicle, having the steps:
- determining elevation angles (α) of radar object locating processes with respect to a coordinate system of the radar sensor (10); and
- determining an elevation misalignment angle (ϕ) on the basis of a frequency distribution of the elevation angles (α) of at least some of the radar object locating processes,
**characterized in that**
in the step of determining elevation angles (α) of radar object locating processes with respect to a coordinate system of the radar sensor (10), in each case on the basis of radar echoes which are obtained with at least two antenna direction characteristics (20, 21) which differ in the elevation direction, an elevation angle (α) of a radar object locating process is determined,
and further **characterized by** the step:
- determining a ground reflection correction value (f) in accordance with the determined elevation misalignment angle (ϕ);
wherein during subsequent processes of determining elevation angles (α) of radar object locating processes the ground reflection correction value (f) is used to correct the determined elevation angle (α) in order to take into account an expected multi-path propagation of the radar signals as a result of reflection on the ground (36).

2. Method according to Claim 1, in which a ground reflection correction value (f) is determined according to a characteristic curve of the correction value (f) in accordance with the determined elevation misalignment angle (ϕ), wherein according to the characteristic curve the correction value (f) can assume a plurality of intermediate values between a maximum value and a minimum value, and the extent of correction of the determined elevation angle (α) depends on the correction value (f).

3. Method according to one of the preceding claims, in which after an elevation misalignment angle (ϕ) has been determined, the elevation angle (α) is corrected during subsequent processes of determining elevation angles (α) of radar object locating processes, wherein a correction value (f) is determined on the basis of the determined elevation misalignment angle (ϕ), and wherein in the case of an object distance d the elevation angle (α) is corrected by adding a correction angle β which is scaled with a correction value (f), wherein the correction angle β is determined according to the equation β = arctan (h/d), where h corresponds to the installation height of the radar sensor (10).

4. Method according to one of the preceding claims, wherein only radar object locating processes which have a minimum signal-to-noise ratio and/or a minimum backscatter intensity are used for the frequency distribution.

5. Method according to one of the preceding claims, wherein for the frequency distribution only radar object locating processes are used which satisfy one criterion or a combination of a plurality of the criteria according to which:
- the radar object locating processes are limited to a distance range;
- the radar object locating processes are limited to an azimuth angle range;
- the elevation angle (α) which is determined for the respective radar object locating process and/or azimuth angle (δ) which is determined for the radar object locating process have been determined by comparing at least one measured radar signal with at least one stored reference signal with a minimum comparison quality;
- the radar object locating processes relate to moving radar targets (18), and
- the radar object locating processes have taken place at a velocity (V_{ego}) which is unequal to zero of the vehicle in question.

6. Method according to one of the preceding claims, wherein the radar sensor (10) comprises a multi-target estimator (28) which is configured to detect a multi-target situation and to determine at least two direction angles (δ₁, δ₂) of a radar echo when the radar echo can be assigned to at least two radar objects (18) at different angular positions (δ₁, δ₂), and
wherein for the frequency distribution only radar object locating processes are used in which the multi-target estimator (28) does not detect a multi-target situation.

7. Method according to one of the preceding claims, wherein the radar sensor (10) is embodied as an FMCW radar sensor and has an evaluation device (14) which is configured to detect a situation of superimposed radar echoes at a peak of a discrete frequency spectrum, obtained at a frequency ramp, of a baseband signal, and wherein for the frequency distribution radar object locating processes in which a situation of superimposed radar echoes is detected by the evaluation device (14) are excluded.

8. Radar sensor for vehicles, **characterized by** an evaluation device (15) which is designed to carry out the method according to one of Claims 1 to 7.

## Revendications

1. Procédé permettant de déterminer un angle de désalignement d'élévation (ϕ) d'un capteur radar (10) d'un véhicule, comprenant les étapes suivantes :
- la détermination d'angles d'élévation (α) de localisations radar d'objets en référence à un système de coordonnées du capteur radar (10) ; et
- la détermination d'un angle de désalignement d'élévation (ϕ) sur la base d'une distribution de fréquence des angles d'élévation (α) d'au moins certaines des localisations radar d'objets,
**caractérisé en ce que**,
lors de l'étape de détermination d'angles d'élévation (α) de localisations radar d'objets en référence à un système de coordonnées du capteur radar (10), on détermine respectivement, sur la base d'échos radar obtenus avec au moins deux caractéristiques (20, 21) dont les directions de directivité d'antenne diffèrent par l'orientation d'élévation, un angle d'élévation (α) d'une localisation radar d'objet,
et **caractérisé en outre par** l'étape suivante :
- la détermination d'une valeur de correction de réflexion au sol (f) en fonction de l'angle de désalignement d'élévation (ϕ) déterminé ;
dans lequel, lors de déterminations ultérieures d'angles d'élévation (α) de localisations radar d'objets, la valeur de correction de réflexion au sol (f) est utilisée pour corriger l'angle d'élévation (α) déterminé afin de prendre en compte une propagation multitrajet attendue des signaux radar par réflexion au sol (36).

2. Procédé selon la revendication 1, dans lequel une valeur de correction de réflexion au sol (f) est déterminée conformément à une courbe caractéristique de la valeur de correction (f) en fonction de l'angle de désalignement d'élévation (ϕ) déterminé, dans lequel la valeur de correction (f) peut prendre une pluralité de valeurs intermédiaires entre une valeur maximale et une valeur minimale conformément à la courbe caractéristique, et l'importance de la correction de l'angle d'élévation (α) déterminé dépend de la valeur de correction (f).

3. Procédé selon l'une des revendications précédentes, dans lequel, après une détermination d'un angle de désalignement d'élévation (ϕ), une correction de l'angle d'élévation (α) est effectuée lors de déterminations ultérieures d'angles d'élévation (α) des localisations radar d'objets,
dans lequel une valeur de correction (f) est déterminée sur la base de l'angle de désalignement d'élévation (ϕ) déterminé, et dans lequel l'angle d'élévation (α) est corrigé pour une distance d'objet d par addition d'un angle de correction β mis à l'échelle avec une valeur de correction (f), dans lequel l'angle de correction β est déterminé conformément à l'équation β = arctan (h/d), où h correspond à la hauteur d'installation du capteur radar (10) .

4. Procédé selon l'une des revendications précédentes, dans lequel seules sont utilisées pour la distribution de fréquence les localisations radar d'objets qui présentent un rapport signal/bruit minimal et/ou une intensité de rétrodiffusion minimale.

5. Procédé selon l'une des revendications précédentes, dans lequel seules sont utilisées pour la distribution de fréquence les localisations radar d'objets satisfaisant l'un ou une combinaison de plusieurs des critères suivants :
- les localisations radar d'objets sont limitées à une plage de distances ;
- les localisations radar d'objets sont limitées à une plage d'angles d'azimut ;
- l'angle d'élévation (α) déterminé pour la localisation angulaire radar d'objet respective et/ou un angle d'azimut (δ) déterminé pour la localisation radar d'objet a été déterminé par comparaison d'au moins un signal radar mesuré à au moins un signal de référence stocké ayant un niveau de concordance minimal ;
- les localisations radar d'objets sont relatives à des cibles radar en mouvement (18),
- les localisations radar d'objets se produisent pour une vitesse de véhicule (V_{ego}) différente de zéro du véhicule lui-même.

6. Procédé selon l'une des revendications précédentes, dans lequel le capteur radar (10) comprend un estimateur à cibles multiples (28) qui est conçu pour détecter une situation de cibles multiples et pour déterminer au moins deux angles de direction (δ₁, δ₂) d'un écho radar lorsque l'écho radar peut être attribué à au moins deux objets radar (18) à des positions angulaires (δ₁, δ₂) différentes, et
dans lequel seules sont utilisées pour la distribution de fréquence des localisations radar d'objets pour lesquelles l'estimateur à cibles multiples (28) ne détecte pas de situation de cibles multiples.

7. Procédé selon l'une des revendications précédentes, dans lequel le capteur radar (10) est réalisé sous la forme d'un capteur radar FMCW et comporte un dispositif d'évaluation (14) qui est conçu pour détecter une situation de superposition d'échos radar dans un pic d'un spectre de fréquence discret d'un signal en bande de base obtenu dans le cas d'une rampe de fréquences, et
dans lequel les localisations radar d'objets pour lesquelles une situation de superposition d'échos radar est détectée par le dispositif d'évaluation (14) sont exclues pour la distribution de fréquence.

8. Capteur radar pour véhicules, **caractérisé par** un dispositif d'évaluation (15) qui est conçu pour mettre en œuvre le procédé selon l'une des revendications 1 à 7.
